(19) Europäisches Patentamt
European Patent Office
Office européen des brevets

(11) Veröffentlichungsnummer: **0 336 163 B1**

# (12) EUROPÄISCHE PATENTSCHRIFT

(45) Veröffentlichungstag der Patentschrift: **09.06.93**

(51) Int. Cl.$^5$: **C09B 67/22**, D06P 1/18

(21) Anmeldenummer: **89104678.1**

(22) Anmeldetag: **16.03.89**

## (54) Mischungen von Monoazofarbstoffen.

(30) Priorität: **30.03.88 DE 3810726**

(43) Veröffentlichungstag der Anmeldung:
**11.10.89 Patentblatt 89/41**

(45) Bekanntmachung des Hinweises auf die Patenterteilung:
**09.06.93 Patentblatt 93/23**

(84) Benannte Vertragsstaaten:
**CH DE FR GB IT LI**

(56) Entgegenhaltungen:
**EP-A- 0 093 935**
**EP-A- 0 126 406**
**GB-A- 2 108 141**

**CHEMICAL ABSTRACTS, Band 98, Nr. 16, 1983, Seite 76, Nr. 127682c, Columbus, Ohio, US; & JP-A-57 168 953 (SUMITOMO CHEMICAL CO., LTD) 18-10-1982**

(73) Patentinhaber: **CASSELLA Aktiengesellschaft**
**Hanauer Landstrasse 526**
**W-6000 Frankfurt am Main 61(DE)**

(72) Erfinder: **Bühler, Ulrich, Dr.**
**Kastanienweg 8**
**W-8755 Alzenau(DE)**
Erfinder: **Hähnke, Manfred, Dr.**
**Behring-Strasse 13**
**W-6233 Kelkheim(DE)**
Erfinder: **Kühn, Reinhard**
**Heinrich-Bleicher-Strasse 39**
**W-6000 Frankfurt am Main(DE)**
Erfinder: **Boos, Margarete**
**Am See 6**
**W-6234 Hattersheim(DE)**

(74) Vertreter: **Urbach, Hans-Georg, Dr. et al**
**Hanauer Landstrasse 526**
**W-6000 Frankfurt am Main 60 (DE)**

EP 0 336 163 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Mischungen von Monoazofarbstoffen, die dadurch gekennzeichnet sind, daß sie aus einem oder mehreren Farbstoffen der allgemeinen Formel I

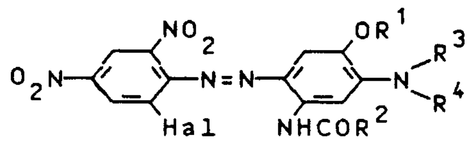

(I)

und einem oder mehreren Farbstoffen der allgemeinen Formel II

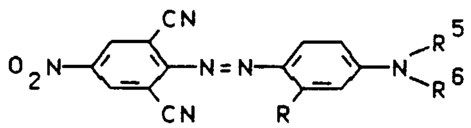

(II)

worin
Hal Brom oder Chlor
$R^1$ und $R^2$ unabhängig voneinander Methyl oder Ethyl
$R^3$, $R^4$, $R^5$ und $R^6$ unabhängig voneinander lineares Alkyl mit 1 bis 4 C-Atomen oder Alkenyl mit 3 oder 4 C-Atomen,
R Methyl oder Acylamino aus der Reihe Acetylamino, Propionylamino, i-Butyrylamino, oder n-Butyrylamino bedeuten,
bestehen, wobei in einer Mischung, die mehr als einen Farbstoff der allgemeinen Formel II enthält, R entweder nur Methyl oder nur Acylamino bedeuten kann.

Die Erfindung betrifft auch Verfahren zur Herstellung der erfindungsgemäßen Farbstoffmischungen sowie deren Verwendung zum Färben und Bedrucken von hydrophoben Fasermaterialien und deren Mischungen mit natürlichen Faserstoffen.

Es ist bereits bekannt, daß Gemische aus mindestens zwei verschiedenen Einzelfarbstoffen der allgemeinen Formel II verbesserte färberische Eigenschaften im Vergleich zu den Einzelfarbstoffen besitzen (vergl. DE-B-22 34 465 und EP-A-93 935).

Es wurde nun überraschenderweise gefunden, daß die erfindungsgemäßen Mischungen wesentlich verbesserte färberische Eigenschaften gegenüber den Einzelfarbstoffen und zum Teil auch gegenüber den Mischungen der DE-B-22 34 465 und EP-A-93 935 besitzen.

Die erfindungsgemäßen Farbstoffmischungen bestehen aus einem oder mehreren Farbstoffen der allgemeinen Formel I und einem oder mehreren Farbstoffen der allgemeinen Formel II. Bevorzugt sind erfindungsgemäße Farbstoffmischungen, die aus je einem oder zwei Farbstoffen der allgemeinen Formeln I bzw. II bestehen.

Bevorzugt sind auch Farbstoffmischungen, die aus Farbstoffen der allgemeinen Formeln I und II bestehen, wobei $R^1$ und $R^2$ Methyl und/oder $R^3$ und $R^4$ unabhängig voneinander Ethyl, n-Propyl oder Allyl und/oder $R^5$ und $R^6$ unabhängig voneinander Ethyl oder n-Propyl bedeuten.

Bevorzugte Mischungen liegen auch vor, wenn $R^3$ und $R^4$ bzw. $R^5$ und $R^6$ gleich sind.

Des weiteren liegen bevorzugte Mischungen vor, wenn R Methyl, Acetylamino, i-Butyrylamino oder n-Butyrylamino bedeutet.

Falls die erfindungsgemäße Mischung mehr als einen Farbstoff der allgemeinen Formel II enthält, so stehen für R bevorzugt die Kombinationen Acetylamino/i-Butyrylamino, Propionylamino/i-Butyrylamino, Propionylamino/ n-Butyrylamino, i-Butyrylamino/n-Butyrylamino oder inbesondere die Kombination Acetylamino/n-Butyrylamino.

Weitere bevorzugte Mischungen, die mehr als einen Farbstoff der allgemeinen Formel II enthalten, sind solche, in denen $R^5$ und $R^6$ innerhalb eines Farbstoffs gleich, aber von Farbstoff zu Farbstoff verschieden sind. Bevorzugte Kombination für $R^5$ und $R^6$ sind in diesem Fall Ethyl/n-Butyl, n-Propyl/n-Butyl und insbesondere Ethyl/n-Propyl.

Besonders bevorzugte Farbstoffmischungen sind solche, in denen mehrere bevorzugte Merkmale zusammenkommen.

Ganz besonders bevorzugt sind Farbstoffmischungen, die aus Farbstoffen der allgemeinen Formeln I und II bestehen, wobei Hal für Brom, $R^1$ und $R^2$ für Methyl, $R^3$ und $R^4$ untereinander gleich und für Ethyl oder Allyl, $R^5$ und $R^6$ für Ethyl und R für Acetylamino oder n-Butyrylamino stehen. Falls die Mischung mehr als einen Farbstoff der allgemeinen Formel II enthält, steht R auch ganz besonders bevorzugt für die Kombination Acetylamino/n-Butyrylamino. Weitere bevorzugte Mischungen, die mehr als einen Farbstoff der allgemeinen Formel II enthalten, sind solche, in denen R für Acetylamino und $R^5$ und $R^6$ innerhalb eines Farbstoffs gleich, aber von Farbstoff zu Farbstoff verschieden sind und für die Kombination Ethyl/n-Propyl stehen.

In den erfindungsgemäßen Farbstoffmischungen kann das Verhältnis der verschiedenen Farbstoffe der allgemeinen Formeln I und II in relativ weiten Grenzen variieren. Im allgemeinen beträgt der Mindestgewichtsanteil einer Komponente 10 % und der maximale Gewichtsanteil 90 %. Bei Farbstoffmischungen, die nur aus je einem Farbstoff der allgemeinen Formeln I bzw. II bestehen, ist ein Mengenverhältnis von 70/30 bis 30/70 bevorzugt, d.h. der Gewichtsanteil eines Farbstoffs beträgt 30 bis 70 %.

Die Einzelfarbstoffe der allgemeinen Formel I und II sind bekannt und z.B. in der DE-C-17 94 402, der EP-A-36 512, der US-Patentschrift 4 076 498 oder der japanischen Patentanmeldung J 8 1009 596 beschrieben.

Die erfindungsgemäßen Farbstoffmischungen können nach verschiedenen Verfahren hergestellt werden, z.B. durch Mischen der getrennt hergestellten und getrennt formierten Einzelfarbstoffe. Dieser Mischprozeß erfolgt in geeigneten Mischern wie z.B. Taumelmischern, in geeigneten Mühlen, beispielsweise Kugel- und Sandmühlen. Getrennt formierte Einzelfarbstoffe können aber auch durch Einrühren in Färbeflotten gemischt werden.

Vorzugsweise werden die erfindungsgemäßen Mischungen durch gemeinsame Formierung der getrennt hergestellten Einzelkomponenten erhalten.

Diese gemeinsame Formierung ist dadurch gekennzeichnet, daß eine Farbstoffmischung aus jeweils mindestens einem Farbstoff der allgemeinen Formeln I und II in Gegenwart von Dispergiermitteln in geeigneten Mühlen, wie z.B. Kugel- oder Sandmühlen, gemahlen und, wenn eine pulverförmige Farbstoff-Formierung hergestellt werden soll, anschließend sprühgetrocknet wird.

Geeignete Dispergiermittel sind z.B. anionische oder nichtionische Dispergiermittel, die auch gemeinsam eingesetzt werden können. Anionische Dispergiermittel sind z.B. Kondensationsprodukte aus aromatischen Sulfonsäuren und Formaldehyd, insbesondere Kondensationsprodukte aus Alkylnaphthalinsulfonsäuren und Formaldehyd, Kondensationsprodukte aus gegebenenfalls substituiertem Phenol mit Formaldehyd und Natriumbisulfit, Alkalimetallsalze von Kondensationsprodukten aus gegebenenfalls substituiertem Phenol, Naphthalin- bzw. Naphtholsulfonsäuren, Formaldehyd und Natriumbisulfit, Alkalimetallsalze von Kondensationsprodukten aus gegebenenfalls substituierten Phenolsulfonsäuren, Formaldehyd und Harnstoff sowie Alkalimetallsalze von Ligninsulfonsäuren; Alkyl- oder Alkyl-aryl-sulfonate, sowie Alkyl-aryl-polyglykolethersulfate. Nichtionische Dispergiermittel oder Emulgatoren sind z.B. Umsetzungsprodukte von Alkylenoxiden, wie z.B. Ethylen-oder Propylenoxid mit alkylierbaren Verbindungen, wie z.B. Fettalkoholen, Fettaminen, Fettsäuren, Phenolen, Alkylphenolen, Arylalkylphenolen, Arylalkylarylphenolen und Carbonsäureamiden, wie z.B. Anlagerungsprodukte von 5 bis 10 Ethylenoxid-Einheiten an $C_8$-$C_{10}$-Alkylphenole.

Die Mahlung erfolgt bei Temperaturen zwischen 10 und 90 °C, vorzugsweise bei 30 bis 60 °C. Bei der gemeinsamen Formierung getrennt hergestellter Einzelkomponenten ist die gemeinsame Mahlung bei Temperaturen über 30 °C vorteilhaft. Die Farbstoffteilchen werden dabei mechanisch so weit zerkleinert, daß eine optimale spezifische Oberfläche erreicht wird und die Sedimentation des Farbstoffs möglichst gering ist. Die Teilchengröße der Farbstoffe liegen im allgemeinen zwischen 0,5 und 5 $\mu$m, vorzugsweise bei etwa 1 $\mu$m.

Es ist vorteilhaft, die getrennt hergestellten Einzelkomponenten der Farbstoffmischung vor der gemeinsamen Mahlung einer gemeinsam thermischen Behandlung zu unterwerfen. Diese thermische Behandlung ist dadurch gekennzeichnet, daß man die Einzelkomponenten der Farbstoffmischung, gegebenenfalls unter Druck, in Wasser eine halbe bis mehrere Stunden auf Temperaturen von 50 bis 150 °C, vorzugsweise 90 bis 130 °C, erhitzt und wieder abkühlt. Dieses Erhitzen erfolgt vorteilhaft in Gegenwart eines oder mehrerer Dispergiermittel oder eines organischen Lösungsmittels. Solche Lösungsmittel sind zum Beispiel Methanol, Ethanol, Dimethylformamid oder Dimethylsulfoxid, vorzugsweise jedoch in Wasser wenig lösliche Lösungsmittel wie Toluol, Chlorbenzol, 1.2-Dichlorbenzol oder Butylacetat. Diese Lösungsmittel werden nach der thermischen Behandlung wieder abdestilliert.

Eine bevorzugt Vorbehandlung der Einzelkomponenten der Farbstoffmischung vor der gemeinsamen Mahlung ist das gemeinsame Lösen der Einzelkomponenten in einem organischen Lösungsmittel oder Lösungsmittelgemisch mit anschließendem Auskristallisieren oder Ausfällen, Isolieren, z.B. durch Filtration und Abtrennen von Lösungsmittelresten, z.B. durch Waschen.

Die so erhaltenen Farbstoffdispersionen können sehr vorteilhaft zum Ansatz von Druckpasten und Färbeflotten verwendet werden. Besondere Vorteile bieten sie z.B. bei den Kontinue-Verfahren, bei denen durch kontinuierliche Farbstoff-Einspeisung in die laufende Apparatur die Farbstoffkonzentration der Färbeflotten konstant gehalten werden muß.

Für gewisse Anwendungsbereiche werden Pulvereinstellungen bevorzugt. Diese Pulver enthalten den Farbstoff, Dispergiermittel und andere Hilfsmittel, wie z.B. Netz-, Oxydations-, Konservierungs- und Entstaubungsmittel.

Ein bevorzugtes Herstellungsverfahren für pulverförmige Farbstoffzubereitungen besteht darin, daß den oben beschriebenen flüssigen Farbstoffdispersionen die Flüssigkeit entzogen wird, z.B. durch Vakuumtrocknung, Gefriertrocknung, durch Trocknung auf Walzentrocknern, vorzugsweise aber durch Sprühtrocknung.

Die Farbstoffgehalte der flüssigen Farbstoffeinstellungen liegen bei 20 bis 40%, die Dispergiermittelgehalte bei ca. 20 bis 40%. Bei Pulvereinstellungen liegen die Farbstoffgehalte bei 20 bis 60% und die Dispergiermittelgehalte bei 40 bis 80%. Aus ökonomischen Gründen wird ein Farbstoffgehalt von 20% meist nicht unterschritten.

Die erfindungsgemäßen Farbstoffmischungen sind als solche oder auch im Gemisch mit anderen Dispersionsfarbstoffen vorzüglich zum Färben und Bedrucken von hydrophoben synthetischen Fasermaterialien und deren Mischungen mit natürlichen Faserstoffen geeignet. Überraschenderweise sind sie den Einzelfarbstoffen im Hinblick auf färberisches Verhalten und coloristische Echtheiten, wie z.B. Thermomigration, Thermofixierechtheit, Wasser-, Wasch- und Reibechtheit, insbesondere im Aufbau- und Ausziehvermögen und im Egalisiervermögen, überlegen. Außerdem werden bei den erfindungsgemäßen Farbstoffmischungen auch bei einer Herabsetzung der Färbetemperaturen und Verkürzung der Färbezeit noch hervorragend farbstarke Färbungen bei ausgezeichneter Baderschöpfung erhalten.

Als hydrophobe synthetische Materialien kommen z.B. in Betracht: Cellulose-2$^1$/2-Acetat, Cellulosetriacetat, Polyamide und besonders Polyester, wie z.B. Polyethylenglykolterephthalat. Deren Mischungen mit natürlichen Faserstoffen sind z.B. Baumwolle, regenerierte Cellulose-fasern oder Wolle.

Die Erfindung wird durch die folgenden Beispiel näher erläutert:

Beispiel 1

14,7 g des Farbstoffs der Formel III

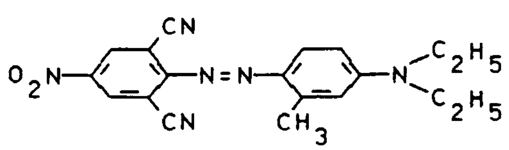

(III)

14,7 g des Farbstoffs der Formel IV

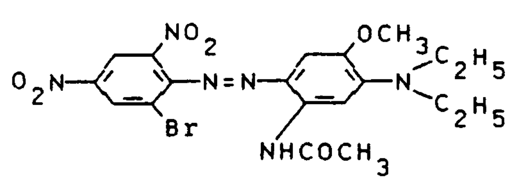

(IV)

werden gemeinsam mit 227,6 g Wasser, 86,8 g eines höher molekularen Ligninsulfonats und 6,3 g eines Arylpolyglykolethers mit einer Dissolverscheibe homogenisiert und der pH-Wert mit 2,6 ml 50%iger Essigsäure auf 8,0 gestellt. Anschließend wird dieser Anschlag in einer wassergekühlten Perlmühle bis zu einer Feinverteilung von < 5 $\mu$ gemahlen, der so erhaltene Mahlteig zur Abtrennung vom Mahlmittel gesiebt und danach mit einem Sprühtrockner getrocknet.

1,25 g des so erhaltenen Farbstoffs werden in 2000 g Wasser dispergiert. Die Dispersion wird mit 4 g Ammoniumsulfat, 2 g eines handelsüblichen Dispergiermittels auf Basis eines Kondensationsproduktes aus Naphthalinsulfon säurenatriumsalz und Formaldehyd und 2 g eines Kondensationsproduktes aus m-Kresol, Formaldehyd und Natriumsulfit versetzt und mit Essigsäure auf einen pH-Wert von 5,5 gestellt. In die so erhaltene Färbeflotte bringt man 100 g eines texturierten Polyestergewebes auf Basis Polyethylenglykolter-ephthalat ein und färbt 1/2 Stunde bei 120 °C. Nach anschließendem Spülen, reduktiver Nachbehandlung mit einer 0,2%igen Natriumdithionitlösung während 15 Minuten bei 70 bis 80 °C, Spülen und Trocknen, erhält man eine farbstarke blaue Färbung mit hervorragenden coloristischen Eigenschaften.

Bringt man zur Herstellung eines Nachzugs in das Färbebad nochmals 100 g eines texturierten Polyestergewebes auf Basis Polyethylenglykolterephthalat ein und färbt 1 Stunde bei 135 °C und behandelt den Nachzug wie vorstehend bei der eigentlichen Färbung angegeben nach, so erhält man eine nahezu farblose Färbung.

Beispiel 2

0,12 g des Farbstoffpulvers aus Beispiel 1 werden in 200 ml Wasser eingerührt und unter Rühren mit 0,2 g eines handelsüblichen Dispergiermittels auf Basis eines Kondensationsprodukts aus m-Kresol, Formaldehyd und Natriumsulfit, 0,3 g eines handelsüblichen Carriers auf Basis von Methylnaphthalin, 0,4 g Natriumacetat krist. sowie 1,2 ml 30%ige Essigsäure versetzt. Der pH-Wert des Färbebads beträgt 4,5. In dieses Färbebad werden 10 g eines Polyestergewebes auf Basis von Polyethylenglykolterephthalat eingebracht und in einer Färbebombe unter Druck eine Stunde bei 106 °C gefärbt. Man stellt, wie vorstehend beschrieben, durch Spülen, reduktive Nachbehandlung, erneutes Spülen und Trocknen fertig und und erhält ebenfalls eine farbstarke blaue Färbung mit sehr guten coloristischen Echtheiten.

Beispiel 3

Ersetzt man in Beispiel 1 die 14,7 g des Farbstoffs der Formel III durch die entsprechende Menge des Farbstoffs der Formel V

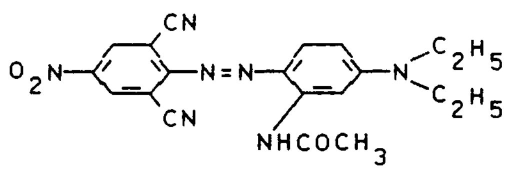

(V)

und verfährt weiter so, wie in Beispiel 1 beschrieben, erhält man auch hier eine farbstarke blaue Färbung mit hervorragenden coloristischen Eigenschaften und einem nur schwach angefärbten Nachzug.

In der nachstehenden Tabelle sind weitere erfindungsgemäße Farbstoffmischungen mit den Bedeutungen R, $R^1$ und $R^2$ und dem Gewichtsverhältnis der Einzelfarbstoffe angegeben, die nach den vorstehenden Angaben herstellbar sind und die auf Polyestermaterialien ebenfalls farbstarke blaue Färbungen bzw. Drucke mit ebenfalls sehr guten coloristischen Eigenschaften liefern.

Tabelle

| Bsp. | Hal | $R^1$ | $R^2$ | $R^3$ | $R^4$ | $R^5$ | $R^6$ | R | Mischungsverhältnis |
|---|---|---|---|---|---|---|---|---|---|
| 4 | Br | $CH_3$ | $CH_3$ | $C_2H_5$ | $C_2H_5$ | - | - | - | 45 |
| | - | - | - | - | - | $n-C_3H_7$ | $n-C_3H_7$ | $CH_3$ | 55 |
| 5 | Br | $CH_3$ | $CH_3$ | $C_2H_5$ | $C_2H_5$ | - | - | - | 35 |
| | - | - | - | - | - | $C_2H_5$ | $n-C_3H_7$ | $CH_3$ | 65 |
| 6 | Br | $CH_3$ | $CH_3$ | $C_2H_5$ | $C_2H_5$ | - | - | - | 60 |
| | - | - | - | - | - | $CH_3$ | $n-C_4H_9$ | $CH_3$ | 40 |
| 7 | Br | $CH_3$ | $CH_3$ | $C_2H_5$ | $C_2H_5$ | - | - | - | 50 |
| | - | - | - | - | - | $C_2H_5$ | $C_2H_5$ | $NHCOC_2H_5$ | 50 |
| 8 | Br | $CH_3$ | $CH_3$ | $C_2H_5$ | $C_2H_5$ | - | - | - | 25 |
| | - | - | - | - | - | $C_2H_5$ | $C_2H_5$ | $NHCOnC_3H_7$ | 75 |
| 9 | Br | $CH_3$ | $CH_3$ | $C_2H_5$ | $C_2H_5$ | - | - | - | 55 |
| | - | - | - | - | - | $C_2H_5$ | $C_2H_5$ | $NHCOiC_3H_7$ | 45 |
| 10 | Br | $CH_3$ | $CH_3$ | $C_2H_5$ | $C_2H_5$ | - | - | - | 65 |
| | - | - | - | - | - | $n-C_3H_7$ | $n-C_3H_7$ | $NHCOCH_3$ | 35 |
| 11 | Br | $CH_3$ | $CH_3$ | $C_2H_5$ | $C_2H_5$ | - | - | - | 45 |
| | - | - | - | - | - | $n-C_3H_7$ | $n-C_3H_7$ | $NHCOC_2H_5$ | 55 |
| 12 | Br | $CH_3$ | $CH_3$ | $C_2H_5$ | $C_2H_5$ | - | - | - | 50 |
| | - | - | - | - | - | $CH_3$ | $n-C_3H_7$ | $NHCOCH_3$ | 50 |
| 13 | Br | $CH_3$ | $CH_3$ | $C_2H_5$ | $C_2H_5$ | - | - | - | 35 |
| | - | - | - | - | - | $C_2H_5$ | $n-C_4H_9$ | $NHCOCH_3$ | 65 |
| 14 | Br | $CH_3$ | $CH_3$ | $C_2H_5$ | $C_2H_5$ | - | - | - | 35 |
| | - | - | - | - | - | $C_2H_5$ | $n-C_3H_7$ | $NHCOnC_3H_7$ | 65 |

| Bsp. | Hal | $R^1$ | $R^2$ | $R^3$ | $R^4$ | $R^5$ | $R^6$ | R | Mischungs-verhältnis |
|---|---|---|---|---|---|---|---|---|---|
| 15 | Br | $CH_3$ | $CH_3$ | $C_2H_5$ | $C_2H_5$ | - | - | - | 45 |
| | - | - | - | - | - | $CH_3$ | $n-C_3H_7$ | $NHCOCH_3$ | 55 |
| 16 | Cl | $CH_3$ | $CH_3$ | $C_2H_5$ | $C_2H_5$ | - | - | - | 40 |
| | - | - | - | - | - | $C_2H_5$ | $C_2H_5$ | $CH_3$ | 60 |
| 17 | Cl | $CH_3$ | $CH_3$ | $C_2H_5$ | $C_2H_5$ | - | - | - | 60 |
| | - | - | - | - | - | $C_2H_5$ | $n-C_3H_7$ | $CH_3$ | 40 |
| 18 | Cl | $CH_3$ | $CH_3$ | $C_2H_5$ | $C_2H_5$ | - | - | - | 35 |
| | - | - | - | - | - | $n-C_3H_7$ | $n-C_3H_7$ | $CH_3$ | 65 |
| 19 | Cl | $CH_3$ | $CH_3$ | $C_2H_5$ | $C_2H_5$ | - | - | - | 50 |
| | - | - | - | - | - | $C_2H_5$ | $C_2H_5$ | $NHCOCH_3$ | 50 |
| 20 | Cl | $CH_3$ | $CH_3$ | $C_2H_5$ | $C_2H_5$ | - | - | - | 35 |
| | - | - | - | - | - | $C_2H_5$ | $n-C_3H_7$ | $NHCOCH_3$ | 65 |
| 21 | Cl | $CH_3$ | $CH_3$ | $C_2H_5$ | $C_2H_5$ | - | - | - | 65 |
| | - | - | - | - | - | $n-C_3H_7$ | $n-C_3H_7$ | $NHCOCH_3$ | 35 |
| 22 | Cl | $CH_3$ | $CH_3$ | $C_2H_5$ | $C_2H_5$ | - | - | - | 50 |
| | - | - | - | - | - | $C_2H_5$ | $C_2H_5$ | $NHCOC_2H_5$ | 50 |
| 23 | Cl | $CH_3$ | $CH_3$ | $C_2H_5$ | $C_2H_5$ | - | - | - | 50 |
| | - | - | - | - | - | $C_2H_5$ | $C_2H_5$ | $NHCOnC_3H_7$ | 50 |
| 24 | Cl | $CH_3$ | $CH_3$ | $C_2H_5$ | $C_2H_5$ | - | - | - | 45 |
| | - | - | - | - | - | $C_2H_5$ | $C_2H_5$ | $NHCOiC_3H_7$ | 55 |

| Bsp. | Hal | $R^1$ | $R^2$ | $R^3$ | $R^4$ | $R^5$ | $R^6$ | R | Mischungsverhältnis |
|---|---|---|---|---|---|---|---|---|---|
| 25 | Cl | $CH_3$ | $CH_3$ | $C_2H_5$ | $C_2H_5$ | - | - | - | 55 |
| | - | - | - | - | - | $CH_3$ | $n-C_3H_7$ | $NHCOnC_3H_7$ | 45 |
| 26 | Br | $CH_3$ | $CH_3$ | $CH_2CH=CH_2$ | $CH_2CH=CH_2$ | - | - | - | 65 |
| | - | - | - | - | - | $C_2H_5$ | $C_2H_5$ | $CH_3$ | 35 |
| 27 | Br | $CH_3$ | $CH_3$ | $CH_2CH=CH_2$ | $CH_2CH=CH_2$ | - | - | - | 60 |
| | - | - | - | - | - | $CH_3$ | $n-C_3H_7$ | $CH_3$ | 40 |
| 28 | Br | $CH_3$ | $CH_3$ | $CH_2CH=CH_2$ | $CH_2CH=CH_2$ | - | - | - | 70 |
| | - | - | - | - | - | $n-C_3H_7$ | $n-C_3H_7$ | $CH_3$ | 30 |
| 29 | Br | $CH_3$ | $CH_3$ | $CH_2CH=CH_2$ | $CH_2CH=CH_2$ | - | - | - | 50 |
| | - | - | - | - | - | $C_2H_5$ | $C_2H_5$ | $NHCOCH_3$ | 50 |
| 30 | Br | $CH_3$ | $CH_3$ | $CH_2CH=CH_2$ | $CH_2CH=CH_2$ | - | - | - | 50 |
| | - | - | - | - | - | $C_2H_5$ | $C_2H_5$ | $NHCOC_2H_5$ | 50 |
| 31 | Br | $CH_3$ | $CH_3$ | $CH_2CH=CH_2$ | $CH_2CH=CH_2$ | - | - | - | 60 |
| | - | - | - | - | - | $C_2H_5$ | $C_2H_5$ | $NHCOnC_3H_7$ | 40 |
| 32 | Br | $CH_3$ | $CH_3$ | $CH_2CH=CH_2$ | $CH_2CH=CH_2$ | - | - | - | 35 |
| | - | - | - | - | - | $C_2H_5$ | $C_2H_5$ | $NHCOiC_3H_7$ | 65 |
| 33 | Br | $CH_3$ | $CH_3$ | $CH_2CH=CH_2$ | $CH_2CH=CH_2$ | - | - | - | 50 |
| | - | - | - | - | - | $n-C_3H_7$ | $n-C_3H_7$ | $NHCOCH_3$ | 50 |
| 34 | Br | $CH_3$ | $CH_3$ | $CH_2CH=CH_2$ | $CH_2CH=CH_2$ | - | - | - | 50 |
| | - | - | - | - | - | $CH_3$ | $n-C_3H_7$ | $NHCOCH_3$ | 50 |
| 35 | Cl | $CH_3$ | $CH_3$ | $CH_2CH=CH_2$ | $CH_2CH=CH_2$ | - | - | - | 75 |
| | - | - | - | - | - | $C_2H_5$ | $C_2H_5$ | $CH_3$ | 25 |

| Bsp. | Hal | $R^1$ | $R^2$ | $R^3$ | $R^4$ | $R^5$ | $R^6$ | R | Mischungsverhältnis |
|---|---|---|---|---|---|---|---|---|---|
| 36 | Cl | $CH_3$ | $CH_3$ | $CH_2CH=CH_2$ | $CH_2CH=CH_2$ | - | - | - | 25 |
| | - | - | - | - | - | $CH_3$ | $n-C_3H_7$ | $CH_3$ | 75 |
| 37 | Cl | $CH_3$ | $CH_3$ | $CH_2CH=CH_2$ | $CH_2CH=CH_2$ | - | - | - | 40 |
| | - | - | - | - | - | $n-C_3H_7$ | $n-C_3H_7$ | $CH_3$ | 60 |
| 38 | Cl | $CH_3$ | $CH_3$ | $CH_2CH=CH_2$ | $CH_2CH=CH_2$ | - | - | - | 55 |
| | - | - | - | - | - | $C_2H_5$ | $C_2H_5$ | $NHCOCH_3$ | 45 |
| 39 | Cl | $CH_3$ | $CH_3$ | $CH_2CH=CH_2$ | $CH_2CH=CH_2$ | - | - | - | 60 |
| | - | - | - | - | - | $C_2H_5$ | $C_2H_5$ | $NHCOC_2H_5$ | 40 |
| 40 | Cl | $CH_3$ | $CH_3$ | $CH_2CH=CH_2$ | $CH_2CH=CH_2$ | - | - | - | 30 |
| | - | - | - | - | - | $C_2H_5$ | $C_2H_5$ | $NHCOnC_3H_7$ | 70 |
| 41 | Cl | $CH_3$ | $CH_3$ | $CH_2CH=CH_2$ | $CH_2CH=CH_2$ | - | - | - | 50 |
| | - | - | - | - | - | $n-C_3H_7$ | $n-C_3H_7$ | $NHCOCH_3$ | 50 |
| 42 | Cl | $CH_3$ | $CH_3$ | $CH_2CH=CH_2$ | $CH_2CH=CH_2$ | - | - | - | 80 |
| | - | - | - | - | - | $CH_3$ | $n-C_3H_7$ | $NHCOCH_3$ | 20 |
| 43 | Br | $CH_3$ | $CH_3$ | $C_2H_5$ | $C_2H_5$ | - | - | - | 45 |
| | - | - | - | - | - | $CH_2CH=CH_2$ | $CH_2CH=CH_2$ | $CH_3$ | 55 |
| 44 | Br | $CH_3$ | $CH_3$ | $C_2H_5$ | $C_2H_5$ | - | - | - | 55 |
| | - | - | - | - | - | $CH_2CH=CH_2$ | $C_2H_5$ | $CH_3$ | 45 |
| 45 | Br | $CH_3$ | $CH_3$ | $C_2H_5$ | $C_2H_5$ | - | - | - | 50 |
| | - | - | - | - | - | $CH_2CH=CH_2$ | $CH_2CH=CH_2$ | $NHCOCH_3$ | 50 |
| 46 | Br | $CH_3$ | $CH_3$ | $C_2H_5$ | $C_2H_5$ | - | - | - | 65 |
| | - | - | - | - | - | $CH_2CH=CH_2$ | $CH_2CH=CH_2$ | $NHCOC_2H_5$ | 35 |

| Bsp. | Hal | $R^1$ | $R^2$ | $R^3$ | $R^4$ | $R^5$ | $R^6$ | R | Mischungs-verhältnis |
|---|---|---|---|---|---|---|---|---|---|
| 47 | Br | $CH_3$ | $CH_3$ | $C_2H_5$ | $C_2H_5$ | - | - | - | 35 |
| | - | - | - | - | - | $CH_2CH=CH_2$ | $CH_2CH=CH_2$ | $NHCOnC_3H_7$ | 65 |
| 48 | Br | $CH_3$ | $CH_3$ | $C_2H_5$ | $C_2H_5$ | - | - | - | 45 |
| | - | - | - | - | - | $CH_2CH=CH_2$ | $C_2H_5$ | $NHCOCH_3$ | 55 |
| 49 | Cl | $CH_3$ | $CH_3$ | $C_2H_5$ | $C_2H_5$ | - | - | - | 55 |
| | - | - | - | - | - | $CH_2CH=CH_2$ | $CH_2CH=CH_2$ | $CH_3$ | 45 |
| 50 | Cl | $CH_3$ | $CH_3$ | $C_2H_5$ | $C_2H_5$ | - | - | - | 50 |
| | - | - | - | - | - | $CH_2CH=CH_2$ | $CH_2CH=CH_2$ | $NHCOCH_3$ | 50 |
| 51 | Cl | $CH_3$ | $CH_3$ | $C_2H_5$ | $C_2H_5$ | - | - | - | 20 |
| | - | - | - | - | - | $CH_2CH=CH_2$ | $CH_2CH=CH_2$ | $NHCOC_2H_5$ | 80 |
| 52 | Cl | $CH_3$ | $CH_3$ | $C_2H_5$ | $C_2H_5$ | - | - | - | 90 |
| | - | - | - | - | - | $C_2H_5$ | $CH_2CH=CH_2$ | $NHCOCH_3$ | 10 |
| 53 | Br | $CH_3$ | $CH_3$ | $CH_2CH=CH_2$ | $CH_2CH=CH_2$ | - | - | - | 70 |
| | - | - | - | - | - | $CH_2CH=CH_2$ | $CH_2CH=CH_2$ | $NHCOCH_3$ | 30 |
| 54 | Br | $CH_3$ | $CH_3$ | $CH_2CH=CH_2$ | $CH_2CH=CH_2$ | - | - | - | 85 |
| | - | - | - | - | - | $CH_2CH=CH_2$ | $CH_2CH=CH_2$ | $CH_3$ | 15 |
| 55 | Cl | $CH_3$ | $CH_3$ | $CH_2CH=CH_2$ | $CH_2CH=CH_2$ | - | - | - | 75 |
| | - | - | - | - | - | $CH_2CH=CH_2$ | $CH_2CH=CH_2$ | $CH_3$ | 25 |
| 56 | Cl | $CH_3$ | $CH_3$ | $CH_2CH=CH_2$ | $CH_2CH=CH_2$ | - | - | - | 70 |
| | - | - | - | - | - | $CH_2CH=CH_2$ | $CH_2CH=CH_2$ | $NHCOCH_3$ | 30 |
| 57 | Br | $C_2H_5$ | $CH_3$ | $C_2H_5$ | $C_2H_5$ | - | - | - | 45 |
| | - | - | - | - | - | $C_2H_5$ | $C_2H_5$ | $CH_3$ | 55 |

| Bsp. | Hal | $R^1$ | $R^2$ | $R^3$ | $R^4$ | $R^5$ | $R^6$ | R | Mischungs-verhältnis |
|---|---|---|---|---|---|---|---|---|---|
| 58 | Br | $C_2H_5$ | $CH_3$ | $C_2H_5$ | $C_2H_5$ | - | - | - | 50 |
| | - | - | - | - | - | $C_2H_5$ | $C_2H_5$ | $NHCOCH_3$ | 50 |
| 59 | Br | $C_2H_5$ | $CH_3$ | $C_2H_5$ | $C_2H_5$ | - | - | - | 35 |
| | - | - | - | - | - | $C_2H_5$ | $C_2H_5$ | $NHCOC_2H_5$ | 65 |
| 60 | Br | $C_2H_5$ | $CH_3$ | $C_2H_5$ | $C_2H_5$ | - | - | - | 70 |
| | - | - | - | - | - | $n-C_3H_7$ | $n-C_3H_7$ | $CH_3$ | 30 |
| 61 | Br | $C_2H_5$ | $CH_3$ | $C_2H_5$ | $C_2H_5$ | - | - | - | 40 |
| | - | - | - | - | - | $C_2H_5$ | $C_2H_5$ | $NHCOnC_3H_7$ | 60 |
| 62 | Cl | $C_2H_5$ | $CH_3$ | $C_2H_5$ | $C_2H_5$ | - | - | - | 50 |
| | - | - | - | - | - | $C_2H_5$ | $C_2H_5$ | $CH_3$ | 50 |
| 63 | Cl | $C_2H_5$ | $CH_3$ | $C_2H_5$ | $C_2H_5$ | - | - | - | 45 |
| | - | - | - | - | - | $C_2H_5$ | $C_2H_5$ | $NHCOCH_3$ | 55 |
| 64 | Cl | $C_2H_5$ | $CH_3$ | $C_2H_5$ | $C_2H_5$ | - | - | - | 35 |
| | - | - | - | - | - | $n-C_3H_7$ | $n-C_3H_7$ | $NHCOCH_3$ | 65 |
| 65 | Cl | $C_2H_5$ | $CH_3$ | $C_2H_5$ | $C_2H_5$ | - | - | - | 65 |
| | - | - | - | - | - | $C_2H_5$ | $C_2H_5$ | $NHCOnC_3H_7$ | 35 |
| 66 | Br | $C_2H_5$ | $CH_3$ | $C_2H_5$ | $C_2H_5$ | - | - | - | 70 |
| | - | - | - | - | - | $CH_2CH=CH_2$ | $CH_2CH=CH_2$ | $CH_3$ | 30 |
| 67 | Br | $C_2H_5$ | $CH_3$ | $C_2H_5$ | $C_2H_5$ | - | - | - | 35 |
| | - | - | - | - | - | $CH_2CH=CH_2$ | $CH_2CH=CH_2$ | $NHCOCH_3$ | 65 |
| 68 | Cl | $C_2H_5$ | $CH_3$ | $C_2H_5$ | $C_2H_5$ | - | - | - | 45 |
| | - | - | - | - | - | $CH_2CH=CH_2$ | $CH_2CH=CH_2$ | $NHCOC_2H_5$ | 55 |

| Bsp. | Hal | $R^1$ | $R^2$ | $R^3$ | $R^4$ | $R^5$ | $R^6$ | R | Mischungs-verhältnis |
|---|---|---|---|---|---|---|---|---|---|
| 69 | Br | $C_2H_5$ | $CH_3$ | $CH_2CH=CH_2$ | $CH_2CH=CH_2$ | - | - | - | 50 |
| | - | - | - | - | - | $C_2H_5$ | $C_2H_5$ | $CH_3$ | 50 |
| 70 | Br | $C_2H_5$ | $CH_3$ | $CH_2CH=CH_2$ | $CH_2CH=CH_2$ | - | - | - | 50 |
| | - | - | - | - | - | $C_2H_5$ | $C_2H_5$ | $NHCOCH_3$ | 50 |
| 71 | Cl | $C_2H_5$ | $CH_3$ | $CH_2CH=CH_2$ | $CH_2CH=CH_2$ | - | - | - | 40 |
| | - | - | - | - | - | $C_2H_5$ | $C_2H_5$ | $CH_3$ | 60 |
| 72 | Cl | $C_2H_5$ | $CH_3$ | $CH_2CH=CH_2$ | $CH_2CH=CH_2$ | - | - | - | 60 |
| | - | - | - | - | - | $C_2H_5$ | $C_2H_5$ | $NHCOnC_3H_7$ | 40 |
| 73 | Br | $CH_3$ | $C_2H_5$ | $C_2H_5$ | $C_2H_5$ | - | - | - | 45 |
| | - | - | - | - | - | $C_2H_5$ | $C_2H_5$ | $CH_3$ | 55 |
| 74 | Br | $CH_3$ | $C_2H_5$ | $C_2H_5$ | $C_2H_5$ | - | - | - | 50 |
| | - | - | - | - | - | $C_2H_5$ | $C_2H_5$ | $NHCOnC_3H_7$ | 50 |
| 75 | Br | $CH_3$ | $C_2H_5$ | $C_2H_5$ | $C_2H_5$ | - | - | - | 65 |
| | - | - | - | - | - | $n-C_3H_7$ | $n-C_3H_7$ | $NHCOCH_3$ | 35 |
| 76 | Cl | $CH_3$ | $C_2H_5$ | $C_2H_5$ | $C_2H_5$ | - | - | - | 55 |
| | - | - | - | - | - | $C_2H_5$ | $C_2H_5$ | $NHCOCH_3$ | 45 |
| 77 | Br | $CH_3$ | $C_2H_5$ | $CH_2CH=CH_2$ | $CH_2CH=CH_2$ | - | - | - | 50 |
| | - | - | - | - | - | $C_2H_5$ | $C_2H_5$ | $CH_3$ | 50 |
| 78 | Cl | $CH_3$ | $C_2H_5$ | $CH_2CH=CH_2$ | $CH_2CH=CH_2$ | - | - | - | 50 |
| | - | - | - | - | - | $C_2H_5$ | $C_2H_5$ | $NHCOCH_3$ | 50 |
| 79 | Br | $CH_3$ | $CH_3$ | $C_2H_5$ | $n-C_3H_7$ | - | - | - | 40 |
| | - | - | - | - | - | $C_2H_5$ | $C_2H_5$ | $CH_3$ | 60 |

| Bsp. | Hal | $R^1$ | $R^2$ | $R^3$ | $R^4$ | $R^5$ | $R^6$ | R | Mischungsverhältnis |
|---|---|---|---|---|---|---|---|---|---|
| 80 | Br | $CH_3$ | $CH_3$ | $n-C_3H_7$ | $n-C_3H_7$ | - | - | - | 35 |
| | - | - | - | - | - | $C_2H_5$ | $C_2H_5$ | $NHCOCH_3$ | 65 |
| 81 | Br | $CH_3$ | $CH_3$ | $n-C_3H_7$ | $n-C_3H_7$ | - | - | - | 60 |
| | - | - | - | - | - | $C_2H_5$ | $C_2H_5$ | $CH_3$ | 40 |
| 82 | Br | $CH_3$ | $CH_3$ | $CH_3$ | $n-C_4H_9$ | - | - | - | 50 |
| | - | - | - | - | - | $C_2H_5$ | $C_2H_5$ | $NHCOnC_3H_7$ | 50 |
| 83 | Br | $CH_3$ | $CH_3$ | $CH_2CH=CH_2$ | $n-C_3H_7$ | - | - | - | 55 |
| | - | - | - | - | - | $n-C_3H_7$ | $n-C_3H_7$ | $NHCOCH_3$ | 45 |
| 84 | Cl | $CH_3$ | $CH_3$ | $n-C_3H_7$ | $n-C_3H_7$ | - | - | - | 40 |
| | - | - | - | - | - | $C_2H_5$ | $C_2H_5$ | $CH_3$ | 60 |
| 85 | Cl | $CH_3$ | $CH_3$ | $C_2H_5$ | $n-C_4H_9$ | - | - | - | 50 |
| | - | - | - | - | - | $C_2H_5$ | $C_2H_5$ | $NHCOCH_3$ | 50 |
| 86 | Br | $CH_3$ | $CH_3$ | $C_2H_5$ | $C_2H_5$ | - | - | - | 50 |
| | - | - | - | - | - | $C_2H_5$ | $C_2H_5$ | $NHCOCH_3$ | 25 |
| | - | - | - | - | - | $n-C_3H_7$ | $n-C_3H_7$ | $NHCOCH_3$ | 25 |
| 87 | Br | $CH_3$ | $CH_3$ | $C_2H_5$ | $C_2H_5$ | - | - | - | $33^1/3$ |
| | - | - | - | - | - | $C_2H_5$ | $C_2H_5$ | $NHCOCH_3$ | $33^1/3$ |
| | - | - | - | - | - | $C_2H_5$ | $C_2H_5$ | $NHCOnC_3H_7$ | $33^1/3$ |
| 88 | Br | $CH_3$ | $CH_3$ | $C_2H_5$ | $C_2H_5$ | - | - | - | 60 |
| | - | - | - | - | - | $n-C_3H_7$ | $n-C_3H_7$ | $NHCOCH_3$ | 20 |
| | - | - | - | - | - | $C_2H_5$ | $C_2H_5$ | $NHCOnC_3H_7$ | 20 |
| 89 | Br | $CH_3$ | $CH_3$ | $C_2H_5$ | $C_2H_5$ | - | - | - | 30 |
| | - | - | - | - | - | $n-C_3H_7$ | $n-C_3H_7$ | $CH_3$ | 40 |
| | - | - | - | - | - | $C_2H_5$ | $C_2H_5$ | $CH_3$ | 30 |

| Bsp. | Hal | $R^1$ | $R^2$ | $R^3$ | $R^4$ | $R^5$ | $R^6$ | R | Mischungsverhältnis |
|---|---|---|---|---|---|---|---|---|---|
| 90 | Cl | $CH_3$ | $CH_3$ | $C_2H_5$ | $C_2H_5$ | - | - | - | 45 |
| | - | - | - | - | - | $C_2H_5$ | $C_2H_5$ | $NHCOCH_3$ | 15 |
| | - | - | - | - | - | $C_2H_5$ | $C_2H_5$ | $NHCOnC_3H_7$ | 40 |
| 91 | Cl | $CH_3$ | $CH_3$ | $C_2H_5$ | $C_2H_5$ | - | - | - | 40 |
| | - | - | - | - | - | $C_2H_5$ | $C_2H_5$ | $NHCOCH_3$ | 30 |
| | - | - | - | - | - | $n-C_3H_7$ | $n-C_3H_7$ | $NHCOCH_3$ | 30 |
| 92 | Br | $CH_3$ | $CH_3$ | $C_2H_5$ | $C_2H_5$ | - | - | - | 50 |
| | - | - | - | - | - | $CH_2CH=CH_2$ | $CH_2CH=CH_2$ | $NHCOCH_3$ | 25 |
| | - | - | - | - | - | $C_2H_5$ | $C_2H_5$ | $NHCOnC_3H_7$ | 25 |
| 93 | Cl | $CH_3$ | $CH_3$ | $C_2H_5$ | $C_2H_5$ | - | - | - | 40 |
| | - | - | - | - | - | $CH_2CH=CH_2$ | $CH_2CH=CH_2$ | $NHCOC_2H_5$ | 30 |
| | - | - | - | - | - | $C_2H_5$ | $C_2H_5$ | $NHCOCH_3$ | 30 |
| 94 | Br | $CH_3$ | $CH_3$ | $CH_2CH=CH_2$ | $CH_2CH=CH_2$ | - | - | - | 40 |
| | - | - | - | - | - | $C_2H_5$ | $C_2H_5$ | $NHCOCH_3$ | 40 |
| | - | - | - | - | - | $C_2H_5$ | $C_2H_5$ | $NHCOnC_3H_7$ | 20 |
| 95 | Br | $CH_3$ | $CH_3$ | $CH_2CH=CH_2$ | $CH_2CH=CH_2$ | - | - | - | 50 |
| | - | - | - | - | - | $C_2H_5$ | $C_2H_5$ | $NHCOCH_3$ | 25 |
| | - | - | - | - | - | $n-C_3H_7$ | $n-C_3H_7$ | $NHCOCH_3$ | 25 |
| 96 | Br | $CH_3$ | $CH_3$ | $CH_2CH=CH_2$ | $CH_2CH=CH_2$ | - | - | - | 60 |
| | - | - | - | - | - | $C_2H_5$ | $C_2H_5$ | $NHCOCH_3$ | 20 |
| | - | - | - | - | - | $C_2H_5$ | $C_2H_5$ | $NHCOnC_3H_7$ | 10 |
| | - | - | - | - | - | $n-C_3H_7$ | $n-C_3H_7$ | $NHCOCH_3$ | 10 |

| asp. | Hal | $R^1$ | $R^2$ | $R^3$ | $R^4$ | $R^5$ | $R^6$ | R | Mischungs-verhältnis |
|---|---|---|---|---|---|---|---|---|---|
| 97 | Br | $CH_3$ | $CH_3$ | $CH_2CH=CH_2$ | $CH_2CH=CH_2$ | - | - | - | 50 |
| | - | - | - | - | - | $C_2H_5$ | $C_2H_5$ | $CH_3$ | 30 |
| | - | - | - | - | - | $n-C_3H_7$ | $n-C_3H_7$ | $CH_3$ | 20 |
| 98 | Br | $CH_3$ | $CH_3$ | $CH_2CH=CH_2$ | $CH_2CH=CH_2$ | - | - | - | 40 |
| | - | - | - | - | - | $C_2H_5$ | $C_2H_5$ | $CH_3$ | 30 |
| | - | - | - | - | - | $C_2H_5$ | $n-C_3H_7$ | $CH_3$ | 30 |
| 99 | Cl | $CH_3$ | $CH_3$ | $CH_2CH=CH_2$ | $CH_2CH=CH_2$ | - | - | - | 60 |
| | - | - | - | - | - | $C_2H_5$ | $C_2H_5$ | $NHCOCH_3$ | 25 |
| | - | - | - | - | - | $C_2H_5$ | $C_2H_5$ | $NHCOnC_3H_7$ | 15 |
| 100 | Cl | $CH_3$ | $CH_3$ | $CH_2CH=CH_2$ | $CH_2CH=CH_2$ | - | - | - | 50 |
| | - | - | - | - | - | $C_2H_5$ | $C_2H_5$ | $NHCOCH_3$ | 30 |
| | - | - | - | - | - | $n-C_3H_7$ | $n-C_3H_7$ | $NHCOCH_3$ | 20 |
| 101 | Cl | $CH_3$ | $CH_3$ | $CH_2CH=CH_2$ | $CH_2CH=CH_2$ | - | - | - | 70 |
| | - | - | - | - | - | $C_2H_5$ | $C_2H_5$ | $CH_3$ | 15 |
| | - | - | - | - | - | $n-C_3H_7$ | $n-C_3H_7$ | $CH_3$ | 15 |
| 102 | Br | $CH_3$ | $CH_3$ | $CH_2CH=CH_2$ | $CH_2CH=CH_2$ | - | - | - | 40 |
| | - | - | - | - | - | $CH_2CH=CH_2$ | $CH_2CH=CH_2$ | $NHCOCH_3$ | 40 |
| | - | - | - | - | - | $C_2H_5$ | $C_2H_5$ | $NHCOCH_3$ | 20 |
| 103 | Cl | $CH_3$ | $CH_3$ | $CH_2CH=CH_2$ | $CH_2CH=CH_2$ | - | - | - | 50 |
| | - | - | - | - | - | $C_2H_5$ | $C_2H_5$ | $CH_3$ | 45 |
| | - | - | - | - | - | $CH_2CH=CH_2$ | $CH_2CH=CH_2$ | $CH_3$ | 5 |

## Patentansprüche

**1.** Mischungen von Monoazofarbstoffen, dadurch gekennzeichnet, daß sie aus einem oder mehreren Farbstoffen der allgemeinen Formel I

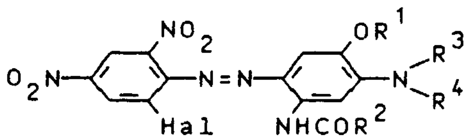

(I)

und einem oder mehreren Farbstoffen der allgemeinen Formel II

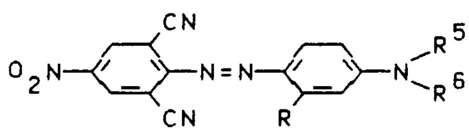

(II)

worin
Hal Brom oder Chlor
$R^1$ und $R^2$ unabhängig voneinander Methyl oder Ethyl
$R^3$, $R^4$, $R^5$ und $R^6$ unabhängig voneinander lineares Alkyl mit 1 bis 4 C-Atomen oder Alkenyl mit 3 oder 4 C-Atomen,
R Methyl, Acetylamino, Propionylamino, i-Butyrylamino, oder n-Butyrylamino bedeuten,
bestehen, wobei in einer Mischung, die mehr als einen Farbstoff der allgemeinen Formel II enthält, R entweder nur Methyl oder nur Acylamino bedeuten kann.

**2.** Farbstoffmischung nach Anspruch 1, dadurch gekennzeichnet, daß sie aus je einem oder zwei Farbstoffen der allgemeinen Formeln I bzw. II besteht.

**3.** Farbstoffmischung nach Anspruch 1 und/oder 2, dadurch gekennzeichnet, daß der Gewichtsanteil eines Farbstoffs der allgemeinen Formeln I bzw. II 10 bis 90 Gew.% und, wenn die Mischung nur aus je einem Farbstoff der allgemeinen Formeln I bzw. II besteht, bevorzugt 30 bis 70 Gew.-% beträgt.

**4.** Farbstoffmischung nach einem oder mehreren der Ansprüche 1 bis 3, dadurch gekennzeichnet, daß Hal für Brom, $R^1$ und $R^2$ für Methyl, $R^3$ und $R^4$ untereinander gleich und für Ethyl oder Allyl, $R^5$ und $R^6$ für Ethyl und R für Acetylamino oder n-Butyrylamino stehen.

**5.** Farbstoffmischung nach einem oder mehreren der Ansprüche 1 bis 4, dadurch gekennzeichnet, daß die Mischung mehr als einen Farbstoff der allgemeinen Formel II enthält und R für die Kombination Acetylamino/n-Butyrylamino steht.

**6.** Farbtoffmischung nach einem oder mehreren der Ansprüche 1 bis 5, dadurch gekennzeichnet, daß die Mischung mehr als einen Farbstoff der allgemeinen Formel II enthält und R für Acetylamino und $R^5$ und $R^6$ innerhalb eines Farbstoffs gleich, aber von Farbstoff zu Farbstoff verschieden sind und für die Kombination Ethyl/n-Propyl stehen.

**7.** Verfahren zur Herstellung der in einem oder mehreren der Ansprüche 1 bis 6 genannten Farbstoffmischungen, dadurch gekennzeichnet, daß die getrennt hergestellten und getrennt formierten Einzelfarbstoffe der allgemeinen Formeln I bzw. II gemischt werden.

**8.** Verfahren zur Herstellung der in einem oder mehreren der Ansprüche 1 bis 6 genannten Farbstoffmischungen, dadurch gekennzeichnet, daß die getrennt hergestellten Einzelfarbstoffe der allgemeinen Formeln I bzw. II gemeinsam formiert werden.

**9.** Verwendung einer Farbstoffmischung nach einem oder mehreren der Ansprüche 1 bis 6 zum Färben und Bedrucken von hydrophoben Fasermaterialien und deren Mischungen mit natürlichen Faserstoffen.

## Claims

1. Mixtures of monoazo dyes, characterized in that they consist of one or more dyes of the general formula I

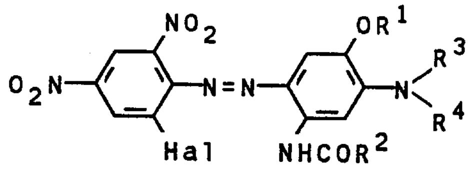

(I)

and one or more dyes of the general formula II

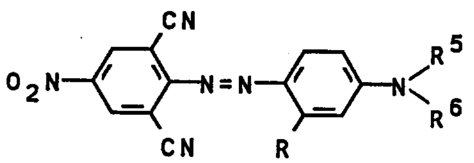

(II)

in which Hal denotes bromine or chlorine, $R^1$ and $R^2$, independently of one another denote methyl or ethyl, $R^3$, $R^4$, $R^5$ and $R^6$, independently of one another, denote linear alkyl having 1 to 4 carbon atoms or alkenyl having 3 or 4 carbon atoms, R denotes methyl, acetylamino, propionylamino, i-butyrylamino, or n-butyrylamino, wherein in a mixture containing more than one dye of the general formula II R can denote either only methyl or only acylamino.

2. Dye mixture according to Claim 1, characterized in that it consists of one or two dyes each of the general formula I or II.

3. Dye mixture according to Claim 1 and/or 2, characterized in that the relative weight of a dye of the general formula I or II is 10 to 90% by weight and, if the mixture consists of only one dye each of the general formulae I and II, preferably 30 to 70% by weight.

4. Dye mixture according to one or more of Claims 1 to 3, characterized in that Hal stands for bromine, $R^1$ and $R^2$ stand for methyl, $R^3$ and $R^4$ are identical to one another and stand for ethyl or allyl, $R^5$ and $R^6$ stand for ethyl and R stands for acetylamino or n-butyrylamino.

5. Dye mixture according to one or more of Claims 1 to 4, characterized in that the mixture contains more than one dye of the general formula II and R stands for the combination acetylamino/n-butyrylamino.

6. Dye mixture according to one or more of Claims 1 to 5, characterized in that the mixture contains more than one dye of the general formula II and R stands for acetylamino and $R^5$ and $R^6$ are identical within one dye but different from dye to dye and stand for the combination ethyl/n-propyl.

7. Process for the preparation of the dye mixtures mentioned in one or more of Claims 1 to 6, characterized in that the separately prepared and separately formulated individual dyes of the general formula I or II are mixed.

8. Process for the preparation of the dye mixtures mentioned in one or more of Claims 1 to 6, characterized in that the separately prepared individual dyes of the general formula I or II are formulated together.

9. Use of a dye mixture according to one or more of Claims 1 to 6 for dyeing and printing hydrophobic fibre materials and mixtures thereof with natural fibres.

## Revendications

1. Mélanges de colorants mono-azoïques, mélanges caractérisés en ce qu'ils sont constitués d'un ou de plusieurs colorants de formule générale I :

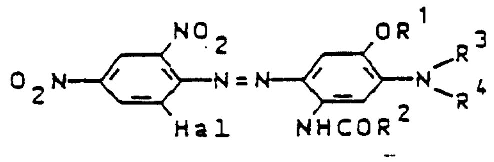

et d'un ou de plusieurs colorants de formule générale II :

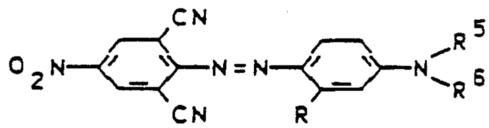

(II)

formules dans lesquelles :

| | |
|---|---|
| Hal | représente le brome ou le chlore, |
| $R^1$ et $R^2$ | représentent chacun, indépendamment l'un de l'autre, un méthyle ou un éthyle, |
| $R^3$, $R^4$, $R^5$ et $R^6$ | représentent chacun, indépendamment l'un de l'autre, un alkyle linéaire contenant de 1 à 4 atomes de carbone ou un alcényle contenant 3 ou 4 atomes de carbone, et |
| R | représente un radical méthyle, acétylamino, propionylamino, isobutyrylamino ou n-butyrylamino, |

le symbole R, dans un mélange contenant plus d'un colorant de formule générale II, pouvant être soit seulement un méthyle, soit seulement un acylamino.

2. Mélange de colorants selon la revendication 1 caractérisé en ce qu'il est constitué d'un ou de deux colorants de formule générale I et d'un ou de deux colorants de formule générale II.

3. Mélange de colorants selon l'une des revendications 1 et 2, caractérisé en ce que la proportion pondérale d'un colorant de formule générale I ou II est comprise entre 10 et 90% en poids, et, lorsque le mélange n'est constitué que d'un colorant de formule générale I et d'un colorant de formule générale II, elle est de préférence comprise entre 30 et 70% en poids.

4. Mélange de colorants selon une ou plusieurs des revendications 1 à 3, mélange caractérisé en ce que Hal représente le brome, $R^1$ et $R^2$ représentent un méthyle,$R^3$ et $R^4$ sont identiques l'un de l'autre et représentent un éthyle ou un allyle, $R^5$ et $R^6$ représentent un éthyle et R représente un acétylamino ou un n-butyrylamino.

5. Mélange de colorants selon une ou plusieurs des revendications 1 à 4, caractérisé en ce qu'il contient plus d'un colorant de formule générale II et en ce que les R représentent l'association acétylamino/n-butyrylamino.

6. Mélange de colorants selon une ou plusieurs des revendications 1 à 5, caractérisé en ce qu'il contient plus d'un colorant de formule générale II, R représente un acétylamino et $R^5$ et $R^6$ sont identiques à l'intérieur d'un même colorant mais sont différents d'un colorant à un autre et représentent l'association éthyle/n-propyle.

**7.** Procédé pour préparer les mélanges de colorants mentionnés dans une ou plusieurs des revendications 1 à 6, procédé caractérisé en ce qu'on mélange les colorants individuels de formules générales I et II qui ont été préparés séparément et conditionnés séparément.

**8.** Procédé pour préparer les mélanges de colorants mentionnés dans une ou plusieurs des revendications 1 à 6, procédé caractérisé en ce qu'on conditionne ensemble les colorants individuels de formules générales I et II qui ont été préparés séparément.

**9.** Application d'un mélange de colorants selon une ou plusieurs des revendications 1 à 6 pour la teinture et l'impression de matières fibreuses hydrophobes et de leurs mélanges avec des matières fibreuses naturelles.